# EUROPÄISCHE PATENTSCHRIFT

(11) **EP 3 510 299 B1**
(45) Veröffentlichungstag und Bekanntmachung des Hinweises auf die Patenterteilung: **11.11.2020**
(21) Anmeldenummer: 17764370.7
(22) Anmeldetag: 05.09.2017
(51) Int. Cl.: F16D 55/226, F16D 65/18

(54) **BREMSSATTEL EINER SCHEIBENBREMSE**
DISC BRAKE CALIPER
ETRIER D'UN FREIN À DISQUE

(30) Priorität: 08.09.2016 DE 102016116793
(43) Veröffentlichungstag der Anmeldung: 17.07.2019
(73) Patentinhaber: KNORR-BREMSE Systeme für Nutzfahrzeuge GmbH, 80809 München (DE)
(72) Erfinder: FISCHL, Tobias, 80336 München (DE); PRITZ, Wolfgang, 80637 München (DE)
(86) Internationale Anmeldenummer: PCT/EP2017/072157
(87) Internationale Veröffentlichungsnummer: WO 2018/046462

(56) Entgegenhaltungen:
- WO-A1-2007/085439
- DE-A1-102011 114 107
- DE-A1-102012 008 573
- DE-A1-102013 006 859
- DE-A1-102014 112 661
- US-A- 5 433 301

## Beschreibung

Die Erfindung betrifft einen Bremssattel einer Scheibenbremse gemäß dem Oberbegriff des Anspruchs 1.

Als Bestandteil einer Scheibenbremse, insbesondere für ein Nutzfahrzeug, dient der Bremssattel in der Hauptsache dazu Funktionsteile aufzunehmen, die zum Bremsbetrieb erforderlich sind. Hierzu zählen vor allem eine Zuspanneinrichtung und eine Nachstelleinrichtung zum Ausgleich eines sich verschleißbedingt verändernden Lüftspiels zwischen Bremsbelägen und einer Bremsscheibe, wobei die Zuspanneinrichtung und die Nachstelleinrichtung als Baueinheit vormontiert in einen Aufnahmeraum eingesetzt sind.

Dabei ist der die genannten Funktionsteile aufnehmende Aufnahmeraum in einem Gehäuse vorgesehen, das über zwei parallel und abständig zueinander angeordnete Zugstreben mit einem Sattelrücken verbunden ist.

Die Zuspanneinrichtung weist einen pneumatisch oder elektromechanisch betätigbaren Bremshebel auf, der verschwenkbar in den Aufnahmeraum gelagert ist und mit dem ein zentraler Bremsstempel gegen einen zuspannseitigen Bremsbelag pressbar ist.

Zur Montage der genannten Funktionsteile weist der Aufnahmeraum auf seiner den Zugstreben zugewandten Seite eine Montageöffnung auf, die zum Schutz der Funktionsteile nach deren Montage durch einen Verschlussdeckel verschlossen ist. Diese Montageöffnung ist etwa rechteckförmig ausgebildet mit zwei sich gegenüberliegenden, sich zu den Zugstreben hin erstreckenden Längsseiten sowie zwei quer dazu verlaufenden Schmalseiten.

Bei einem als Schiebesattel ausgebildeten Bremssattel verfährt der Bremssattel aufgrund der auftretenden Reaktionskräfte unter Mitnahme eines reaktionsseitigen Bremsbelages in Richtung der Bremsscheibe, bis beide Bremsbeläge bremsend an der Bremsscheibe anliegen.

Der Bremssattel muss daher eine ausreichende Festigkeit aufweisen, um die auftretenden Kräfte aufnehmen zu können. Hierzu ist der bekannte Bremssattel einstückig als Gussteil ausgebildet und entsprechend dimensioniert. Ein gattungsgemäßer Bremssattel ist in der DE 10 2012 008 573 A1 offenbart.

Ein wesentliches Kriterium für die dauerhafte Funktionsfähigkeit des Bremssattels ist die Steifigkeit des Gesamtsystems. Durch Elastizitäten der beteiligten Bauteile, insbesondere der Bremsscheibe, der Bremsbeläge und des Bremssattels, ergibt sich ein Hubverlust, der sich durch die Übersetzung des Bremshebels auf den benötigten Hub eines Bremszylinderstößels auswirkt, der bei einer Bremsung am Bremshebel angreift. Eine Minimierung der Elastizitäten, d.h. ein möglichst steifes Bremssystem ist daher angestrebt.

Bei einem Kraftangriff auf abstützende Flächen im Bremssattel, wozu neben der Bremshebellagerung auch die Bremsbelaganlagefläche zählt, wird der Bremssattel quasi gedehnt, wobei bereits versucht wurde, durch Materialwahl und Formgebung eine höhere Steifigkeit des Bremssattels zu erreichen, jedoch bislang ohne befriedigendes Ergebnis.

Aus der WO 2007/085439 A1 ist ein Bremssattel gemäß der Gattung bekannt, dessen Aufnahmeöffnung umlaufend eine Hinterschneidung aufweist unter Ausbildung einer Anlage für Rastzungen des Verschlussdeckels, der innenseitig des Aufnahmeraumes positioniert ist.

Der Erfindung liegt die Aufgabe zugrunde, einen Bremssattel der gattungsgemäßen Art so weiterzuentwickeln, dass der Bremssattel bei Belastung eine höhere Steifigkeit aufweist.

Diese Aufgabe wird durch einen Bremssattel mit den Merkmalen des Anspruchs 1 gelöst.

Wie sich überraschend gezeigt hat, wird durch die gegenüber dem Stand der Technik deutlich verkleinerte Montageöffnung eine deutliche Erhöhung der Steifigkeit des Bremssattels erreicht, wobei der erfindungsgemäß vorgesehene Flansch einen Versteifungsbalken zu den insbesondere auf Biegung beanspruchten Zugstreben bildet.

Bevorzugt ist die Montageöffnung an einer ihrer Schmalseiten durch einen Flansch begrenzt, wobei dieser im Aufnahmeraum eine Hinterschneidung bildet, die es ermöglicht, die als Baueinheit vorliegenden Zuspann- und Nachstelleinrichtungen problemlos zu montieren.

Hierzu wird diese Baueinheit, wie sie im Übrigen in der zum Stand der Technik genannten DE 10 2012 008 573 A1 thematisiert ist, zunächst durch die Montageöffnung in den durch den Hinterschnitt definierten Bereich des Aufnahmeraumes geschwenkt, anschließend vollständig in den Aufnahmeraum eingeschoben und quer dazu in eine endgültige Position verschoben, bis zu einer zentralen Anordnung des Bremsstempels.

Nach einem weiteren Gedanken der Erfindung sind die Gewindebohrungen, in die Schrauben zur Befestigung des Verschlussdeckels eingedreht werden, mit dem die Montageöffnung verschließbar ist, ausschließlich in den sich gegenüberliegenden, in Richtung der Zugstreben sich erstreckenden, quasi die Längsseiten der Montageöffnungen bildenden Randbereichen angeordnet, da hier ausreichend Material zur Verfügung steht, um die Gewindebohrungen einzubringen.

Der dem Aufnahmeraum abgewandte äußere Randbereich der Montageöffnung ist nach einem weiteren Gedanken der Erfindung erhaben ausgebildet im Sinnes eines Absatzes, der eine erforderliche spanende Bearbeitung zur Anlage des Verschlussdeckels insofern begünstigt als dadurch ein guter Spanbruch erreicht wird, der die Fertigung deutlich erleichtert.

Ergänzend oder alternativ ist außen-, d.h. sichtseitig, eine planebene Fläche, vorzugsweise als Vertiefung vorgesehen, die beim Gießen des aus Gusseisen hergestellten Bremssattels mit eingeformt ist.

Diese Fläche dient im Wesentlichen zur Anbringung von Hinweisschildern, beispielsweise zur Typenbezeichnung oder als Kunden-Logo.

Bisher wurden Typenbezeichnungen und Kunden-Logos beim Gießen des Bremssattels angeformt, was jedoch mit erheblichen Kosten verbunden ist, insbesondere wenn kundenabhängige spezielle Gießwerkzeuge erforderlich sind, wobei vielfach nur kundenspezifische geringe Stückzahlen gefertigt werden.

Der insoweit neue Bremssattel bietet demgegenüber deutliche Kostenvorteile, da beispielsweise eine Kundenzuordnung nach Herstellung des Bremssattels erfolgen kann durch Anbringen des entsprechenden Schildes auf der planebenen Fläche.

Dieses Anbringen bzw. Befestigen kann auf unterschiedliche Art erfolgen. Denkbar sind Verbindungen durch Kleben, Schrauben, Nieten, Verprägen, Einklemmen oder dergleichen.

Die Rauigkeit der Rohgussoberfläche begünstigt die stoffschlüssige Verbindung durch Kleben, was im Übrigen mit äußerst geringem Fertigungsaufwand realisierbar ist.

Nach einem weiteren Gedanken der Erfindung wird die bevorzugt in ihrer Konturierung rechteckige Vertiefung auf einer dem Dom des Bremssattels benachbarten Seite des Gehäuses vorgesehen, in einem Bereich, der mechanisch gering belastet ist. Grundsätzlich kann die Vertiefung jedoch an jeder sichtseitigen Stelle des Bremssattels vorgesehen sein, wobei die Vertiefung in ihrer Tiefe vorzugsweise derart gering bemessen ist, dass das darin anzubringende Schild bündig mit der benachbarten Fläche verläuft.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Fig. 1: eine Schnittdarstellung einer Scheibenbremse mit einem erfindungsgemäßen Bremssattel in einer Draufsicht
- Fig. 2: die Scheibenbremse nach Fig. 1 in einem Querschnitt gemäß der Linie II-II in Fig. 1
- Fig. 3: die Scheibenbremse nach Fig. 1 in einer teilweise geschnittenen Draufsicht
- Fig. 4: einen Bremssattel der Scheibenbremse in Alleinstellung in einer perspektivischen Draufsicht
- Fig. 5: ein weiteres Ausführungsbeispiel eines erfindungsgemäßen Bremssattels in einer perspektivischen Draufsicht
- Fig. 6: einen vergrößerten Ausschnitt des Bremssattels nach Fig. 5, gleichfalls schaubildlich dargestellt.

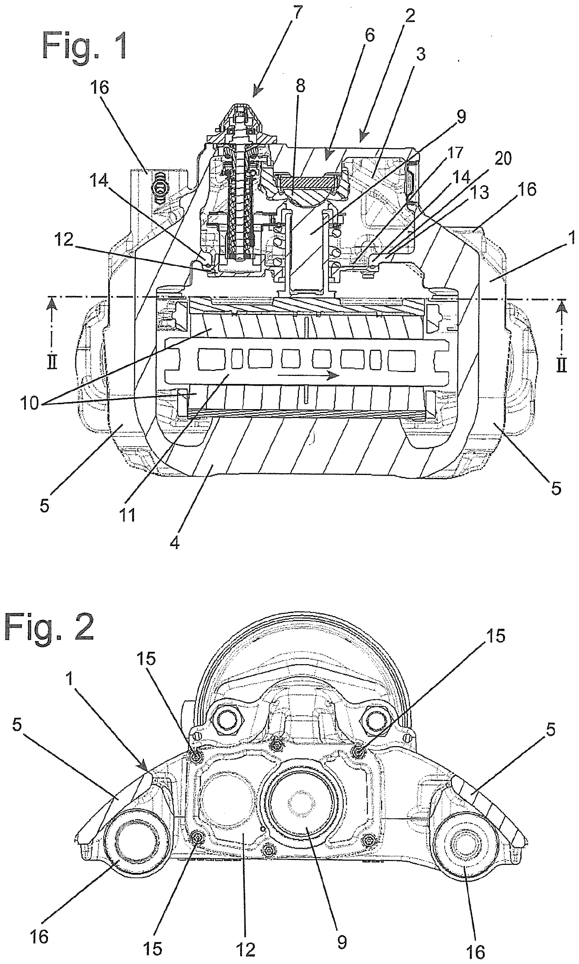

In den Fig. 1-3 ist eine Scheibenbremse abgebildet, mit einem Bremssattel 1, der eine fahrzeugseitige bei Vorwärtsfahrt in Pfeilrichtung sich drehende Bremsscheibe 11 übergreift und der ein Gehäuse 2, gegenüberliegend einem Sattelrücken 4, sowie zwei parallel und abständig zueinander angeordnete, das Gehäuse 2 und den Sattelrücken 4 miteinander verbindende Zugstreben 5 aufweist. Mittels Gleitlagern 16 ist der Bremssattel 1 verschiebbar an einem Bremsträger gehalten.

Beidseitig der Bremsscheibe 11 sind Bremsbeläge 10 im Bremssattel 1 positioniert, wobei an einem, der Zuspanneinrichtung 6 zugeordneten Bremsbelag 10, ein mittels eines verschwenkbaren Bremshebels 8 andrückbarer Bremsstempel 9 anliegt.

Das Gehäuse 2 umschließt einen Aufnahmeraum 3, in dem die Zuspanneinrichtung 6 und die Nachstelleinrichtung 7 angeordnet sind, wobei mittels der Nachstelleinrichtung 7 ein verschleißbedingt sich veränderndes Lüftspiel, d.h. des Abstands zwischen dem Bremsbelag 10 und der Bremsscheibe 11 ausgleichbar ist.

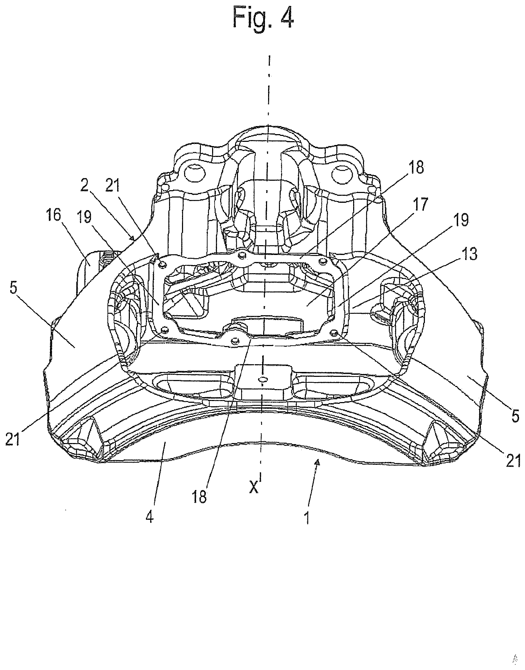

Die Montage der bevorzugt als Baueinheit vorliegenden Zuspann- und Nachstelleinrichtung 6, 7 erfolgt durch eine besonders deutlich in der Fig. 4, die den Bremssattel 1 in Alleinstellung wiedergibt, erkennbare, etwa rechteckförmige Montageöffnung 17 des Aufnahmeraums 3, die auf der dem zuspannseitigen Bremsbelag 10 zugewandten Seite angeordnet ist und die durch einen Verschlussdeckel 12 nach einer Montage der Baueinheit verschlossen ist. Dabei ist die Montageöffnung 17 durch sich in Richtung der Zugstreben 5 erstreckende Längsseiten 18 sowie quer dazu verlaufende Schmalseiten 19 begrenzt.

Wie insbesondere in der Fig. 1 zu erkennen ist, ist die Montageöffnung 17 erfindungsgemäß durch einen an einer ihrer Schmalseiten 19 angeformten Flansch 13 begrenzt, der eine Wandung und eine Hinterschneidung 20 des Aufnahmeraumes 3 bildet, wobei sich der stegartige Flansch 13 in im Auslaufbereich der Bremsscheibe 11 gedachter Fortsetzung der Montageöffnung 17 erstreckt. Dadurch ergibt sich, bezogen auf eine Symmetrieachse X des Aufnahmeraumes 3, eine asymmetrische Anordnung der Montageöffnung 17. Der Flansch 13 entspricht in seiner Höhe zumindest der zugeordneten Höhe der Montageöffnung 17, während die Dicke des Flansches 13 deutlich geringer ist als seine Breite.

Weiter ist zu erkennen, dass der Flansch 13 auf der der Nachstelleinrichtung 7 gegenüberliegenden Seite des Aufnahmeraumes 3 angeordnet ist, wobei der Flansch 13 zum Aufnahmeraum 3 hin durch die Hinterschneidung 20 einen Schwenkraum begrenzt, durch den die Montage der Baueinheit Zuspanneinrichtung/Nachstelleinrichtung 6, 7 möglich ist.

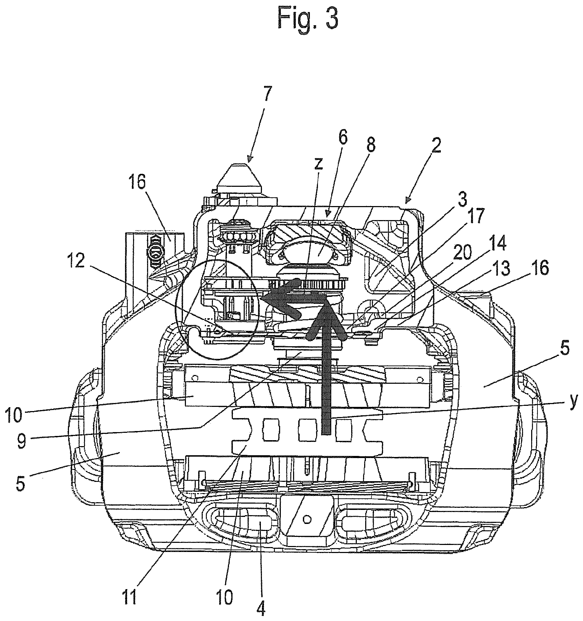

Dabei wird, wie in der Fig. 3 angedeutet, die zunächst schräg stehende Baueinheit in den Schwenkraum geführt (Pfeil Y), anschließend in eine zur Bremsscheibe 11 hin rechtwinklige Position verschwenkt und danach aus dem Bereich des Schwenkraumes verschoben, bis der Bremsstempel 9 eine zentrale Stellung gegenüber dem zugeordneten Bremsbelag 10 einnimmt (Pfeil Z).

Die Fig. 1 zeigt einen umlaufenden, auf der dem Aufnahmeraum 3 abgewandten Seite erhaben ausgebildeten Rand 14 der Montageöffnung 17, an dem der Verschlussdeckel 12 dicht anliegt.

Dieser ist mittels Schrauben 15 am Bremssattel 1 befestigt, wobei hierzu in den Bremssattel 1 in der Fig. 3 erkennbare Gewindebohrungen 21 eingebracht sind, die ausschließlich in den sich gegenüberliegenden, die Längsseiten 18 der Montageöffnung 17 bildenden Randbereichen vorgesehen sind.

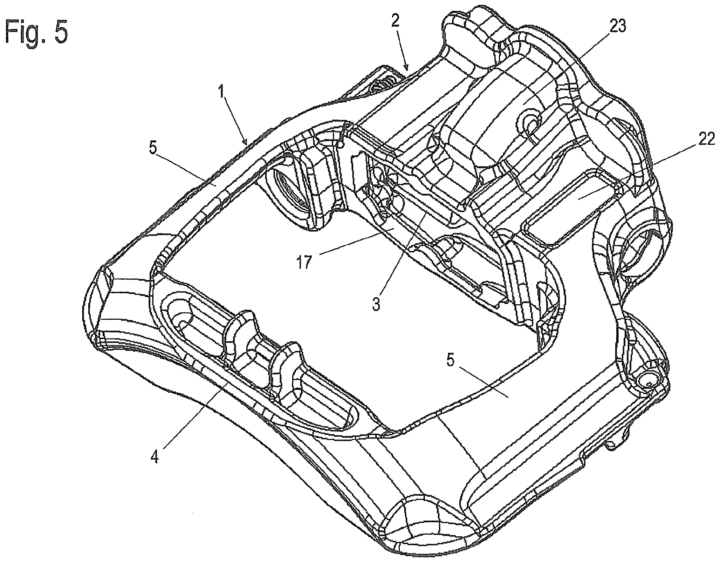

Wie in der Fig. 5 deutlich erkennbar ist, weist der Aufnahmeraum 3 einen angeformten Dom 23 auf, der einen Hebelarm des verschwenkbaren Bremshebels 8 aufnimmt, an dem beispielsweise ein Stößel eines Bremszylinders angreift.

An einer benachbarten Seite des Doms 23 ist an der sichtseitigen Außenfläche des Gehäuses 2 eine planebene Fläche 22 ausgebildet, die gegenüber dem benachbarten Bereich abgesenkt ist und so eine Vertiefung bildet.

Diese Fläche 22 ist im Wesentlichen als längliches Rechteck derart ausgebildet, dass ein gleichfalls planebenes Hinweisschild daran befestigt werden kann.

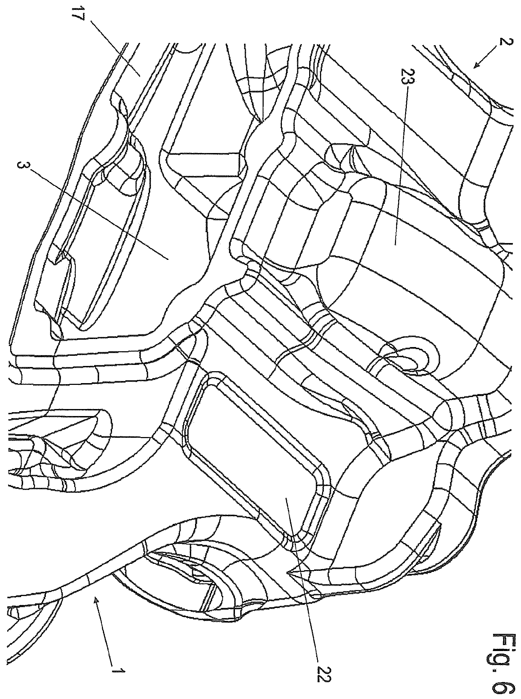

In der Fig. 6 ist der Bereich des Gehäuses 2 vergrößert dargestellt, auf dem die planebene Fläche 22 an einer benachbarten Seite des Doms 23 ausgebildet ist.

### Bezugszeichenliste

- 1: Bremssattel
- 2: Gehäuse
- 3: Aufnahmeraum
- 4: Sattelrücken
- 5: Zugstrebe
- 6: Zuspanneinrichtung
- 7: Nachstelleinrichtung
- 8: Bremshebel
- 9: Bremsstempel
- 10: Bremsbelag
- 11: Bremsscheibe
- 12: Verschlussdeckel
- 13: Flansch
- 14: Rand
- 15: Schraube
- 16: Gleitlager
- 17: Montageöffnung
- 18: Längsseite
- 19: Schmalseite
- 20: Hinterschneidung
- 21: Gewindebohrung
- 22: planebene Fläche
- 23: Dom

## Patentansprüche

1. Bremssattel (1) einer Scheibenbremse, mit zwei im Wesentlichen parallel und mit Abstand zueinander verlaufenden, einen Sattelrücken (4) und einen Aufnahmeraum (3) für Funktionsteile umschließendes Gehäuse (2) miteinander verbindenden Zugstreben (5), wobei der Aufnahmeraum (3) eine durch einen Verschlussdeckel (12) verschließbare, etwa rechteckförmige Montageöffnung (17) aufweist, mit in Richtung der Zugstreben (5) sich erstreckenden Längsseiten (18) und sich quer dazu erstreckenden Schmalseiten (19),
**dadurch gekennzeichnet, dass**
die Montageöffnung (17) durch zumindest einen an einer ihrer Schmalseiten (19) eine Hinterschneidung (20) und eine Wandung des Aufnahmeraumes (3) bildenden Flansch (13) begrenzt ist, der sich in gedachter Fortsetzung der Montageöffnung (17) erstreckt, wobei der Flansch (13) einen Schwenkraum zur Montage der Funktionsteile im Aufnahmeraum (3) begrenzt.

2. Bremssattel nach Anspruch 1,
**dadurch gekennzeichnet, dass**
der Flansch (13) auf der einer montierten Nachstelleinrichtung (7) gegenüberliegenden Seite des Aufnahmeraumes (3) angeordnet ist.

3. Bremssattel nach Anspruch 1 oder 2,
**dadurch gekennzeichnet, dass**
der äußere, dem Aufnahmeraum (3) abgewandte umlaufende Rand (14) der Montageöffnung (17) erhaben ausgebildet ist.

4. Bremssattel nach einem der vorhergehenden Ansprüche,
**dadurch gekennzeichnet, dass**
sich der Flansch (13) über die gesamte Höhe der Schmalseite (19) der Montageöffnung (17) erstreckt.

5. Bremssattel nach einem der vorhergehenden Ansprüche,
**dadurch gekennzeichnet, dass**
die Montageöffnung (17), bezogen auf eine Symmetrieachse (X) des Aufnahmeraumes (3) asymmetrisch angeordnet ist.

6. Bremssattel nach einem der vorhergehenden Ansprüche,
**dadurch gekennzeichnet, dass**
der Flansch (13) auslaufseitige des Bremssattels (1) angeordnet ist.

7. Bremssattel nach einem der vorhergehenden Ansprüche,
**dadurch gekennzeichnet, dass**
ausschließlich an den sich gegenüberliegenden Längsrändern der Montageöffnung (17) Gewindebohrungen (21) vorgesehen sind.

8. Bremssattel nach einem der vorhergehenden Ansprüche,
**dadurch gekennzeichnet, dass**
die Dicke des Flansches (13) geringer ist als seine Breite.

9. Bremssattel nach Anspruch 1 oder dem Oberbegriff des Anspruchs 1,
**dadurch gekennzeichnet, dass**
in einem Teilbereich der sichtseitigen Außenfläche des Bremssattels (1) eine planebene Fläche (22) ausgebildet ist.

10. Bremssattel nach einem der vorhergehenden Ansprüche,
**dadurch gekennzeichnet, dass**
die planebene Fläche (22) an einer benachbarten Seite eines an das Gehäuse (2) angeformten Doms (23) zur Aufnahme eines Hebelarms eines verschwenkbaren Bremshebels (8) angeordnet ist.

11. Bremssattel nach einem der vorhergehenden Ansprüche,
**dadurch gekennzeichnet, dass**
die planebene Fläche (22) als Rechteck, vorzugsweise als längliches Rechteck ausgebildet ist.

12. Bremssattel nach einem der vorhergehenden Ansprüche,
**dadurch gekennzeichnet, dass**
die planebene Fläche (22) gegenüber dem angrenzenden Bereich des Bremssattels (1) abgesenkt ist.

## Claims

1. Brake caliper (1) of a disc brake, with two tie-rods (5) extending parallel and a distance away from one another, which connect to one another a caliper back (4) and a housing (2) which encloses a receiving space (3) for functional components, wherein the said receiving space (3) has an approximately rectangular fitting aperture (17) that can be closed off by a closing cover (12) with long sides (18) that extend in the direction of the tie-rods (5) and short sides (19) that extend transversely thereto,
**characterised in that**
the fitting aperture (17) is delimited by at least one flange (13) on one of its short sides (19), which flange forms an undercut (20) and a wall of the receiving space (3) and extends as a notional continuation of the fitting aperture (17), such that the flange (13) delimits a pivoting space for fitting the functional components into the receiving space (3).

2. Brake caliper according to Claim 1,
**characterised in that**
the flange (13) is arranged on a side of the receiving space (3) opposite an assembled adjusting device (7) .

3. Brake caliper according to Claims 1 or 2,
**characterised in that**
the outer rim (14) of the fitting aperture (17) facing away from the receiving space (3) is raised.

4. Brake caliper according to any of the preceding claims,
**characterised in that**
the flange (13) extends over the full length of the short side (19) of the fitting aperture (17).

5. Brake caliper according to any of the preceding claims,
**characterised in that**
relative to an axis of symmetry (X) of the receiving space (3), the fitting aperture (17) is arranged asymmetrically.

6. Brake caliper according to any of the preceding claims,
**characterised in that**
the flange (13) is arranged on the outlet side of the brake caliper (1).

7. Brake caliper according to any of the preceding claims,
**characterised in that**
threaded bores (21) are provided exclusively along the opposite, long edges of the fitting aperture (17).

8. Brake caliper according to any of the preceding claims,
**characterised in that**
the thickness of the flange (13) is smaller than its width.

9. Brake caliper according to Claim 1 or the preamble of Claim 1,
**characterised in that**
a flat surface (22) is formed on part of the area of the visible side of the outer surface of the brake caliper (1).

10. Brake caliper according to any of the preceding claims,
**characterised in that**
the said flat surface (22) is arranged on a side adjacent to a dome (23) formed on the housing (2) for receiving a lever arm of a pivotable brake lever (8).

11. Brake caliper according to any of the preceding claims,
**characterised in that**
the flat surface (22) is in the form of a rectangle, preferably an elongated rectangle.

12. Brake caliper according to any of the preceding claims,
**characterised in that**
relative to the adjacent area of the brake caliper (1), the flat surface (22) is lower.

## Revendications

1. Etrier (1) de frein d'un frein à disque, ayant deux tirants (5) s'étendant de manière sensiblement parallèle et à distance l'un de l'autre et reliant un dos (4) d'étrier et un espace (3) de réception d'un boîtier (2) entourant des parties fonctionnelles, l'espace (3) de réception ayant une ouverture (17) de montage à peu près rectangulaire, pouvant être fermée par un couvercle (12) de fermeture et ayant des grands côtés (18) s'étendant dans la direction des tirants (5) et des petits côtés (19), qui leur sont perpendiculaires,
**caractérisé en ce que**
l'ouverture (17) de montage est délimitée par au moins une contre-dépouille (20) sur l'un de ses petits côtés (19) et par une bride (13) formant une paroi de l'espace (3) de réception, qui s'étend dans le prolongement imaginaire de l'ouverture (17) de montage, la bride (13) délimitant un espace de pivotement pour le montage des parties fonctionnelles dans l'espace (3) de réception.

2. Etrier de frein suivant la revendication 1,
**caractérisé en ce que**
la bride (13) est disposée du côté de l'espace (3) de réception opposé à un dispositif (7) de rattrapage monté.

3. Etrier de frein suivant la revendication 1 ou 2,
**caractérisé en ce que**
le bord (14) extérieur faisant le tour loin de l'espace (3) de réception de l'ouverture (17) de montage est constitué en saillie.

4. Etrier de frein suivant l'une des revendications précédentes,
**caractérisé en ce que**
la bride (13) s'étend sur toute la hauteur du petit côté (19) de l'ouverture (17) de montage.

5. Etrier de frein suivant l'une des revendications précédentes,
**caractérisé en ce que**
l'ouverture (17) de montage est dissymétrique par rapport à un axe (X) de symétrie de l'espace (3) de réception.

6. Etrier de frein suivant l'une des revendications précédentes,
**caractérisé en ce que**
la bride (13) est disposée du côté de la sortie de l'étrier (1) de frein.

7. Etrier de frein suivant l'une des revendications précédentes,
**caractérisé en ce que**
des taraudages (21) sont prévus exclusivement sur les bords longitudinaux opposés de l'ouverture (17) de montage.

8. Etrier de frein suivant l'une des revendications précédentes,
**caractérisé en ce que**
l'épaisseur de la bride (13) et plus petite que sa largeur.

9. Etrier de frein suivant la revendication 1 ou suivant le préambule de la revendication 1,
**caractérisé en ce que**,
dans une région partielle de la surface extérieure du côté visible de l'étrier (1) de frein, est constituée une surface (22) plane suivant un plan.

10. Etrier de frein suivant l'une des revendications précédentes,
**caractérisé en ce que**
la surface (22) plane suivant un plan est disposée sur un côté voisin d'un mandrin (23) venu de matière avec le boîtier (2) pour la réception d'un bras de levier d'un levier (8) de frein pivotant.

11. Etrier de frein suivant l'une des revendications précédentes,
**caractérisé en ce que**
la surface (22) plane suivant un plan est constituée sous la forme d'un rectangle, de préférence d'un rectangle oblong.

12. Etrier de frein suivant l'une des revendications précédentes,
**caractérisé en ce que**
la surface (22) plane suivant un plan est abaissée par rapport à la région voisine de l'étrier (1) de frein.
